# EUROPÄISCHE PATENTANMELDUNG

(11) **EP 2 607 233 A2**
(43) Veröffentlichungstag der Anmeldung: **26.06.2013**
(21) Anmeldenummer: 12195393.9
(22) Anmeldetag: 04.12.2012
(51) Int. Cl.: B64D 11/06

(54) **Sitzanlage für ein Transportmittel und insbesondere ein Flugzeug**

(30) Priorität: 24.12.2011 DE 102011122474
(71) Anmelder: Magna Seating (Germany) GmbH, 63877 Sailauf (DE)
(72) Erfinder: Orizaris, Vasilios, 71277 Rutesheim (DE)
(74) Vertreter: Völger, Silke Beatrix

(57) **Zusammenfassung**

Die Erfindung betrifft eine Sitzanlage (2; 20) für ein Transportmittel insbesondere ein Flugzeug, aufweisend eine Sitzstruktur (S), die über eine am Transportmittelboden festlegbare Tragstruktur (9) abgestützt ist. Die Sitzanlage für ein Transportmittel insbesondere eines Flugzeugs soll derart weitergebildet werden, dass eine möglichst kostengünstige, gewichtsreduzierte Sitzanlage erzielt wird, die des Weiteren bei Bedarf auch einen hohen Sitzkomfort für die Nutzung von zwei Sitzplätzen für einen Passagier bietet. Dies wird dadurch erreicht, dass die Sitzstruktur (S) ein eine Vielzahl von Sitzbereichen (4) aufweisendes einteiliges Sitzstrukturelement (5), sowie den Sitzbereichen (4) zugeordnete Rückenlehnenbereiche umfasst.

## Beschreibung

Die Erfindung betrifft eine Sitzanlage für ein Transportmittel und insbesondere ein Flugzeug.

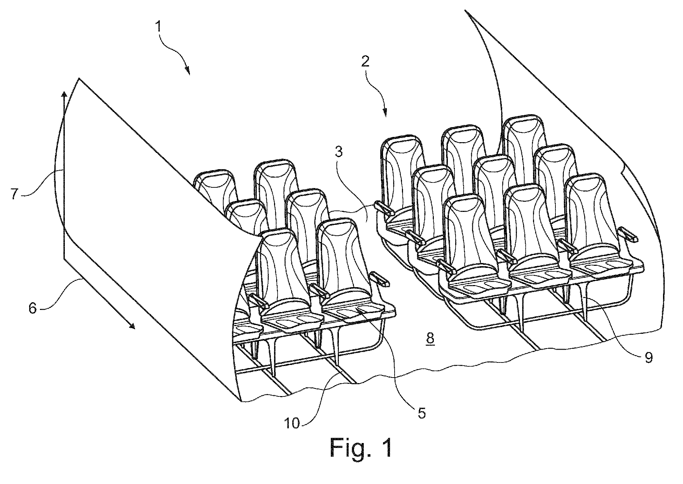

In einem Flugzeug sind derartige Sitzanlagen in hintereinander liegend angeordneten Reihen angeordnet. Die Sitzanlagen umfassen, wie es auch in der Figur 1 dargestellt ist, häufig drei Sitzplätze und sind jeweils auf der linken und rechten Seite der Flugzeugkabine angeordnet. Zwischen den Sitzanlagen befindet sich mittig in der Flugzeugkabine ein Gang. Die Anordnung und Ausführung der Sitzanlagen ist abhängig vom Flugzeugtyp.

Bekannte Sitzanlagen für Flugzeuge bestehen dabei aus einer mehrteilig ausgeführten Stützstruktur. Die Stützstrukturen weisen dabei vordere und hintere Beinelemente auf, die ein Paar bilden und die an einem ersten Endbereich mit dem Kabinenboden fest verbunden sind. Die Beinelemente sind mit ihrem anderen Endbereich an einem vorderen bzw. hinteren Querholm der Stützstruktur festgelegt. Diese einen Tragrahmen bildende Stützstruktur trägt die einzelnen Sitzstrukturen, die jeweils aus einem Sitzboden und verstellbar an der Stützstruktur angeordneter dem Sitzboden zugeordneter Rückenlehne besteht. Zwischen den einzelnen Sitzstrukturen sowie an den Außenseiten der Sitzanlage ist des Weiteren häufig eine verstellbare Armlehne angeordnet. Der Sitzboden sowie die Rückenlehne sind mit einer Polsterung versehen, um bei einem Transport des Passagiers einen entsprechenden Sitzkomfort zu bieten. Die Abmessungen insbesondere die Breite der einzelnen Sitzplätze ist dabei derart konzipiert, dass ca. 95% der Weltbevölkerung bequem auf einem derartigen Sitzplatz der Sitzanlage sitzen kann. Die Standartbreite liegt dabei zwischen 43 -46 cm. Passagieren, die hinsichtlich ihres Körpergewichts nicht in diese Standartsitze passen, müssen zwei Sitzplätze belegen. Hierzu kann bei einer üblichen Sitzanlage die Armlehne hochgeschwenkt werden und die betreffende Person kann benachbarte Sitzplätze nutzen. Dies ist allerdings für den betreffenden Passagier wenig komfortabel.

Zusätzlich ist es bei derartigen Sitzanlagen für Flugzeuge sowie auch für andere Transportmittel stetig ein Ziel sowohl die Fertigung zu optimieren, als auch das Gesamtgewicht zu reduzieren.

Aufgabe der vorliegenden Erfindung ist es daher, eine Sitzanlage für ein Transportmittel insbesondere eines Flugzeugs derart weiterzubilden, dass eine möglichst kostengünstige, gewichtsreduzierte Sitzanlage erzielt wird, die des Weiteren bei Bedarf auch einen hohen Sitzkomfort für die Nutzung von zwei Sitzplätzen für einen Passagier bietet.

Diese Aufgabe wird durch die im Patentanspruch 1 angegebenen Merkmale gelöst.

Weitere vorteilhafte Ausgestaltungen und Weiterbildungen der erfindungsgemäßen Sitzanlage für Transportmittel ergeben sich aus den Unteransprüchen. Die Sitzanlage ist anhand der nachfolgenden Beschreibung für eine Verwendung in einem Flugzeug beschrieben. Die Sitzanlage kann allerdings auch in anderen Transportmitteln wie Reisebussen, Passagierschiffen oder dergleichen eingesetzt werden.

Bevorzugte Ausführungsformen der Sitzanlage werden nachfolgend beispielshalber beschrieben, wobei veranschaulichend auf die beigefügten Zeichnungen Bezug genommen wird.

Es zeigen:
- Figur 1: einen Schnitt durch eine Flugzeugkabine mit einem Ausschnitt einer Vielzahl von Sitzreihen in einer perspektivischen Ansicht,
- Figur 2: die Sitzanlage mit drei Sitzflächen in einer perspektivischen Ansicht,
- Figur 3: eine Rückansicht der Sitzanlage gemäß Figur 3 in einer perspektivischen Ansicht,
- Figur 4: eine Seitenansicht der Sitzanlage gemäß Figur 2,
- Figur 5: ein Sitzteil der Sitzanlage gemäß Figur 1 in einer perspektivischen Ansicht,
- Figur 6: ein Stützelement in einer perspektivischen Ansicht; und
- Figur 7: eine alternative Ausgestaltung einer Sitzanlage mit drei Sitzflächen.

Die Figur 1 zeigt in einer perspektivischen Ansicht einen Schnitt durch eine Flugzeugkabine 1 mit einer Vielzahl von hintereinander in Reihen angeordneten Sitzanlagen 2. Die Sitzanlagen 2 umfassen, wie es auch in der Figur 1 dargestellt ist, häufig drei Sitzplätze und sind jeweils auf der linken und rechten Seite der Flugzeugkabine 1 angeordnet. Zwischen den Sitzanlagen 2 befindet sich mittig in der Flugzeugkabine 1 ein Gang 3. Wie es weiterhin aus der Figur 1 zu ersehen ist, sind die Sitzanlagen 2 jeweils mit drei Sitzbereichen 4 ausgeführten Sitzstrukturen 5 ausgestattet. In jeder Reihe der Flugzeugkabine 1 können somit sechs Passagiere transportiert werden. Die Sitzanlagen 2 sind symmetrisch aufgebaut und ausgestattet und können somit sowohl auf der rechten als auch auf der linken Seite der Flugzeugkabine eingebaut werden.

Die einzelnen Sitzanlagen 2 weisen eine Sitzstruktur 5, die über eine am Transportmittelboden 8 festlegbare Tragstruktur 9 befestigt ist. Am Transportmittelboden sind hierzu vorzugsweise in Längsrichtung (Pfeil 6) verlaufende Bodenschienen 10 angeordnet.

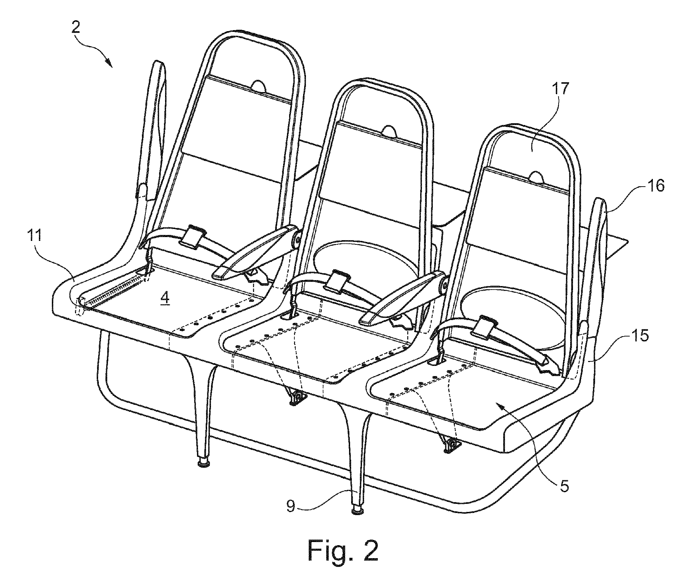

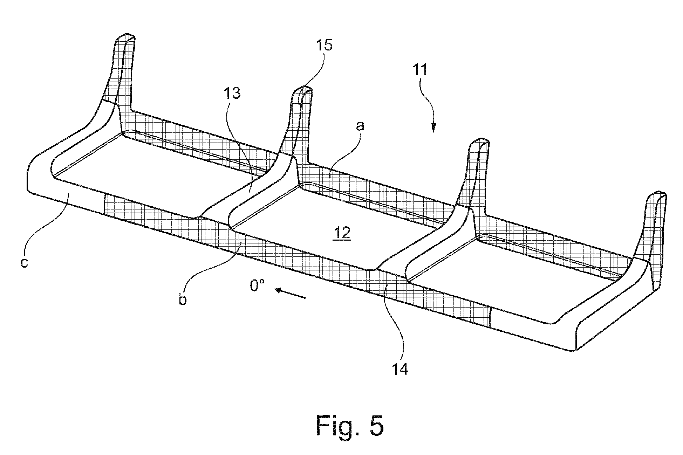

Wie es aus der Figur 2 besser zu ersehen ist, weist die Sitzstruktur 5 ein eine Vielzahl von Sitzbereichen 4 aufweisendes einteiliges schalenförmiges Sitzstrukturelement 11sowie den Sitzbereichen 4 zugeordnete Rückenlehnenelemente 17 auf. Das schalenförmige Sitzstrukturelement ist im Detail in der Figur 5 dargestellt und wird zur Erzielung eines geringen Gewichtes vorzugsweise aus einem Carbon composite hergestellt. Die Sitzbereiche 4 sind hierbei als muldenförmige Vertiefungen 12 ausgeführt, die durch Stegbereiche 13 getrennt ausgeführt sind. Das Sitzsstrukturelement 11 weist einen umlaufenden Randbereich 14 auf. Zur Festlegung bzw. gelenkigen Lagerung von Armlehnen 16 und der den Sitzbereichen zugeordneten Rückenlehnenelemente 17 sind an dem Sitzstrukturelement 11 vertikal nach oben ragende Befestigungsbereiche angeformt. Die entsprechende gelenkige Lagerung der Rückenlehnenelemente sowie der Armlehnen ist bekannt und wird daher nicht näher beschrieben.

Die Sitzanlage 2 gemäß der Figur 2 ist ohne Polsterung dargestellt. Die Sitzanlage mit entsprechender Polsterung der Sitzbereiche sowie der Rückenlehnenbereiche ist in der Figur 1 ersichtlich. Die Polsterelemente für die Sitzbereiche sowie der Rückenlehnenbereiche werden ebenfalls in bekannter Weise ausgeführt und befestigt. Die Sitzpolster der Sitzbereiche werden vorzugsweise der muldenförmigen Vertiefungen im Sitzstrukturelement ausgeführt.

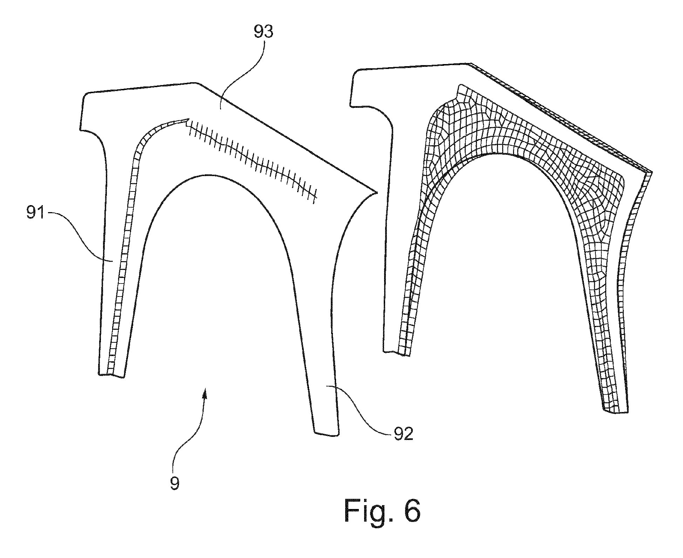

Wie bereits obenstehend kurz erläutert, stützt sich das einteilige Sitzstrukturelement 5 über eine Tragstruktur 9 auf dem Transportmittelboden ab und ist dort über geeignete Verbindungsmittel festgelegt. Die Tragstruktur 9 ist in der Figur 6 im Detail gezeigt. Aus der Darstellung ist ersichtlich, dass die Tragstruktur 9 aus einer Vielzahl einteilig ausgeführter Stützelemente besteht. Die Stützelemente weisen dabei ein vorderes und hinteres Stützbein 91,92 sowie ein die Stützbeine 91, 92 verbindenden Auflagerbereich 93 aufweist. Vorne ist hierbei auf die vordere Sitzkante des Sitzbereichs bezogen, hinten ist auf die hintere Sitzkante des Sitzbereichs bezogen. Der Auflagerbereich der Stützelemente weist eine muldenförmige Vertiefung auf, die einer hervorstehenden Kontur auf der Unterseite des Sitzstrukturelementes (5) entsprechend angepasst ist. Eine Fixierung der Stützelemente an dem Sitzstrukturelement wird über entsprechende Befestigungsmittel erreicht. Aus der Figur 2 kann man erkennen, dass bei einer Sitzanlage mit drei Sitzbereichen jeweils zwischen benachbarten Sitzbereichen ein Stützelement vorgesehen ist.

Ausgehend von dem dem Transportmittelboden zugewandten Endbereich des vorderen Stützbeins 91, ist jeweils eine Diagonalstrebe 94 vorgesehen. Diese verläuft von dem vorderen unteren Bereich des vorderen Stützbeins 91 nach hinten an den oberen Anbindungsbereich des hinteren Stützbeins 92.

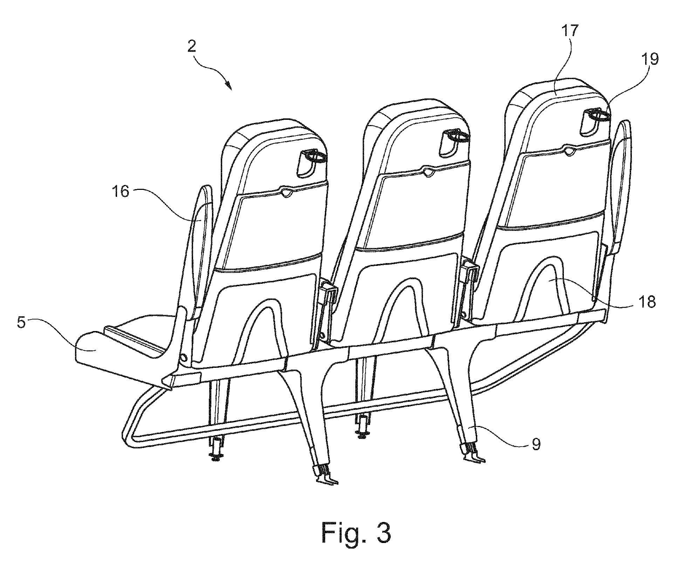

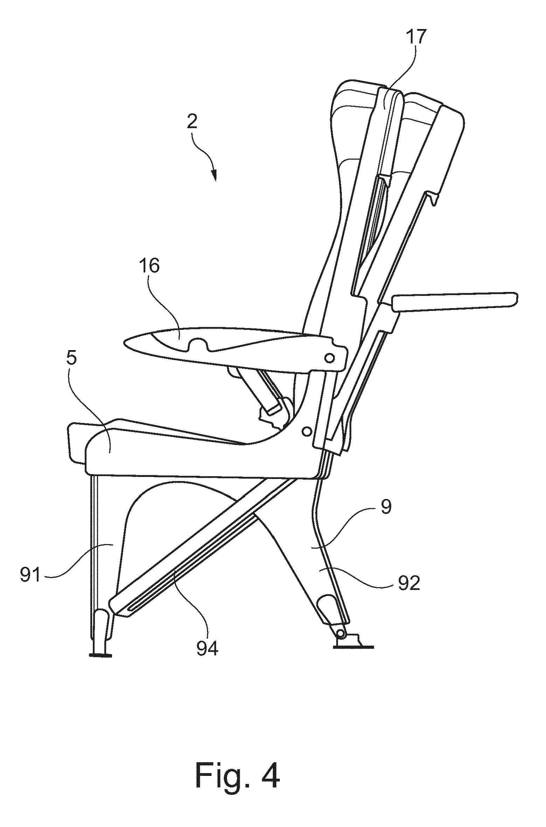

Die Figuren 3 und 4 zeigen die Sitzanlage 20 in einer Seitenansicht und einer Rückansicht. In Figur 4 ist ein an der Rückseite des Rückenlehnenbereichs verschwenkbar angebundenes Tischelement in einer ausgeklappten Position gezeichnet. Aus der Rückansicht der Sitzanlage 20 lässt sich weiterhin ersehen, dass die Rückenlehnenbereiche jeweils mit einer im unteren Rückenlehnenbereich angeordneten bügelförmigen Haltespange 18 ausgebildet sind. Die Haltespange ist v-förmig ausgeführt und dient zum Aufbewahren von flachen Gegenständen wie Zeitschriften, Zeitungen oder dergleichen. In vorteilhafter Weise sind die in der Haltespange 18 aufbewahrten Gegenstände für den Passagier jederzeit sichtbar gehalten. Diese sichtbare Aufbewahrung ist auch für das Reinigungspersonal von Vorteil. Die nach einem Transport von Passagieren im Flugzeug liegen gelassenen Gegenstände können schnell entfernt werden. Weiterhin günstig ist auch, dass die Haltespange 18 keine Dosen oder Flaschen aufnehmen und halten kann. Dies vermeidet zusätzlichen Reinigungsaufwand bei der Reinigung des Flugzeugs nach einem Flug. Zum sicheren Halten von Getränken sind am oberen seitlichen Endbereich der Rückenlehnenbereiche 17 Getränkehalter 19 vorgesehen. Diese sind in der Figur 3 in einer herausgeklappten Gebrauchsposition dargestellt und weisen ringförmige Halteelemente auf. Die Halteelemente sind an einem schwenkbar an der Rückenlehne gehaltenem Basiselement angeformt.

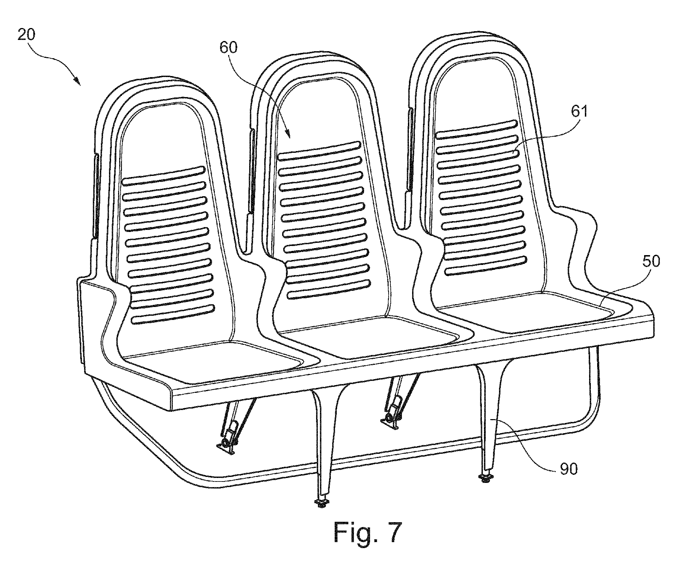

Die Figur 7 zeigt eine Sitzanlage 20 mit einer Sitzstruktur 50, die wie die zuvor beschriebene Sitzanlage 2 über eine Tragstruktur 90 an dem Transportmittelboden festlegbar ist. Im Unterschied zu der Sitzanlage 2 sind bei der Sitzanlage 20 das Sitzstrukturelement sowie die Rückenlehnenbereiche als einteiliges schalenförmiges Sitzstrukturelement ausgebildet. Eine individuelle Neigungsverstellung der Rückenlehnenbereiche ist hierbei nicht möglich. Aus der Darstellung der Figur 7 kann man weiterhin ersehen, dass das schalenförmige Sitzstrukturelement 51 weiterhin Armlehnenbereiche 52 aufweist. Diese sind jeweils randseitig an den Seitenbereichen der Sitzbereiche angeformt. Eine Einstellbarkeit bzw. ein Verschwenken und Hochklappen der Armlehnenbereiche ist nicht möglich. Aufgrund der einteiligen schalenförmigen Bauweise des Sitzstrukturelementes 51 mit Rückenlehnenbereiche und Armlehnenbereiche ist eine einfache und kostengünstige Fertigung möglich. Die Sitzanlage 20 ist ohne Sitz.- bzw. Rückenlehnenpolster dargestellt. Um den Sitzkomfort zu verbessern, sind die Rückenlehnenbereiche mit einer Federung 60 versehen. Die Federung 60 umfasst eine Vielzahl von in dem Rückenlehnenbereich angeordneter querverlaufender Schlitze 61. Die Schlitze sind dabei parallel zueinander beabstandet angeordnet. Hierdurch wird die Nachgiebigkeit der Rückenlehne erhöht.

Um gleichzeitig zwei benachbarte Sitzplätze für einen Passagier nutzbar zu machen, ist in einer nicht gezeigten Ausführungsvariante vorgesehen, die in der Figur 7 dargestellte Sitzanlage ohne Armlehnenbereiche vorzusehen.

In der vorstehenden Beschreibung sind anhand der beigefügten Figuren einige grundsätzliche Prinzipien beschrieben. Die Darstellung in den Zeichnungen und die Beschreibung beziehen sich jeweils auf eine Sitzanlage mit drei in einer Sitzanlage nebeneinander angeordneter Sitze bzw. Sitzplätze. Der der Erfindung zugrundeliegende Gedanke lässt sich allerdings gleichfalls auf eine Sitzanlage mit zwei Sitzbereichen oder mehr als drei Sitzbereichen anwenden.

## Patentansprüche

1. Sitzanlage (2; 20) für ein Transportmittel insbesondere ein Flugzeug, aufweisend eine Sitzstruktur (S), die über eine am Transportmittelboden festlegbare Tragstruktur (9) befestigt ist, wobei die Sitzstruktur (S) ein eine Vielzahl von Sitzbereichen (4) aufweisendes einteiliges Sitzstrukturelement (5), sowie den Sitzbereichen (4) zugeordnete Rückenlehnenbereiche umfasst.

2. Sitzanlage (2) nach Anspruch 1, wobei die Rückenlehnenbereiche separate Rückenlehnenelemente (17) aufweisen, die um eine Achse A an dem Sitzstrukturelement (5) verschwenkbar angeschlagen sind.

3. Sitzanlage (2) nach Anspruch 1 oder 2, wobei das Sitzstrukturelement (5) schalenförmig mit den Sitzbereichen (4) zugeordneten muldenförmigen Vertiefungen (12) versehen ist.

4. Sitzanlage (2) nach einem der vorangehenden Ansprüche, wobei die Sitzbereiche (4) mit jeweils einem Sitzpolster ausgeführt sind, die in den muldenförmigen Vertiefungen verklettet oder verklebt sind, und wobei vorzugsweise die Rückenlehnenbereiche mit Rückenlehnenpolster ausgeführt sind.

5. Sitzanlage (2) nach einem der vorangehenden Ansprüche, wobei das Sitzstrukturelement und /oder die Rückenlehnenbereiche und/oder die Tragstruktur aus einem Carbon composite (CFRP oder CRP) und insbesondere aus einem glasfaserverstärkten Kunststoff (GFK) hergestellt sind.

6. Sitzanlage (2) nach einem oder mehreren der vorangehenden Ansprüche, wobei an dem Sitzstrukturelement (5) im hinteren Randbereich im Wesentlichen senkrecht nach oben ausgebildete Lagerelemente zwischen den Sitzbereichen und an den Außenseiten der Sitzanlage (2) angeformt sind, um eine gelenkige Lagerung von Armlehnen und Rückenlehnen zu ermöglichen.

7. Sitzanlage (2) nach einem oder mehreren der vorangehenden Ansprüche, wobei das Sitzstrukturelement (5) und die Rückenlehnenelemente als einteiliges schalenförmiges Sitzstrukturelement ausgeführt sind.

8. Sitzanlage (2) nach einem oder mehreren der vorangehenden Ansprüche, wobei an dem Sitzstrukturelement (5) zusätzlich zwischen den Sitzbereichen sowie an den Außenseiten Armlehnenbereiche angeformt ausgebildet sind.

9. Sitzanlage (2) nach einem oder mehreren der vorangehenden Ansprüche, wobei die Tragstruktur (9) einteilig ausgeführt ist und ein vorderes und hinteres Stützelement sowie ein die Stützelemente verbindenden Auflagerbereich aufweist.

10. Sitzanlage (2) nach Anspruch 9, wobei der Auflagerbereich eine muldenförmige Vertiefung aufweist, die einer hervorstehenden Kontur auf der Unterseite des Sitzstrukturelementes (5) entsprechend angepasst ist.

11. Sitzanlage (2) nach Anspruch 10, wobei die Tragstruktur über die Auflagerbereiche an dem Sitzstrukturelement befestigt sind und die Tragstruktur am hinteren Randberiech eine nach oben weisenden Anlagebereich für das Sitzstrukturelement aufweist.

12. Sitzanlage (2) nach einem oder mehreren der vorangehenden Ansprüche, wobei die Rückenlehnenbereiche und / oder Sitzbereiche mit einer Federung versehen sind, die aus parallel verlaufenden schlitzförmigen Ausnehmungen gebildet wird.

13. Sitzanlage (2) nach einem oder mehreren der vorangehenden Ansprüche, wobei die Rückenlehnenbereiche auf der Rückseite mit einer bügelförmig ausgeführten Haltespange zum Festklemmen von flächigen Gegenständen angeordnet sind und insbesondere vorzugsweise die Rückenlehnenbereiche auf der Rückseite mit einer Getränkebecherhalterung versehen sind.
